# EUROPEAN PATENT SPECIFICATION

(11) **EP 0 682 606 B1**
(45) Date of publication and mention of the grant of the patent: **09.07.1997**
(21) Application number: 95903450.5
(22) Date of filing: 05.12.1994
(51) Int. Cl.: B60R 1/06

(54) **DEVICE FOR REGULATING MOTOR-DRIVEN FOLDABLE REAR VIEW MIRROR OF AUTOMOBILE**
VORRICHTUNG ZUM STEUERN EINES ABKLAPPBAREN MOTORGETRIEBENEN RÜCKSPIEGELS FÜR FAHRZEUGE
DISPOSITIF DE REGLAGE DE RETROVISEUR ESCAMOTABLE A MOTEUR POUR AUTOMOBILE

(30) Priority: 15.12.1993 KR 2792793
(43) Date of publication of application: 22.11.1995
(73) Proprietor: Poong Jeong Ind. Co., Ltd., Puchon-ci, Kyunggi-do 421-130 (KR)
(72) Inventor: KANG, Gi, Dong 28-6, Kwangmyong-3-dong, Kyunggi-do 423-013 (KR)
(74) Representative: Chameroy, Claude
(86) International application number: KR9400173
(87) International publication number: WO9516589

(56) References cited:
- EP-A- 0 405 773
- EP-A- 0 472 454
- DE-A- 3 936 742
- JP-A- 1 237 235

## Description

### BACKGROUND OF THE INVENTION

### Field of the invention

The present invention relates in general to a device for regulating a motor-driven foldable rear view mirror of an automobile and, more particularly, to a structural improvement in such a regulating device for reducing the number of regulating elements, for preventing random motion of a mirror housing, for automatically returning the mirror housing to its controlled position even in the case of minute displacement of the mirror housing due to external impact, for reducing the cost of such rear view mirror, for achieving desired rigidity of the rear view mirror and for providing a safe backward sight for a driver by reliably keeping a controlled position of the rear view mirror.

### Description of the Prior Art

As well known to those skilled in the art, a motor-driven foldable rear view mirror of an automobile is provided with a regulating device suitable for regulating the folding positions of a mirror housing relative to an automobile body. The mirror regulating device also automatically returns the mirror housing to the controlled position even when the mirror housing is randomly displaced due to external impact or due to operational vibration of a motor when the rear view mirror is controlled in its position by turning the mirror housing about a shaft fixed to a base plate on the automobile body. Therefore, the above regulating device provides a safe backward sight for a driver of the automobile and lets the driver make safe driving.

An example of the typical devices for regulating the motor-driven foldable rear view mirrors is disclosed in Japanese Patent Laid-open Publication No. Heisei. 1-237235. In this regulating device, a drive motor is mounted to a mirror housing frame. The drive motor outputs its rotational force through reduction gears whose end gear gears into a clutch gear mounted to the fixing shaft of the mirror housing. A spring as a biasing member is placed on the clutch gear, so that the spring presses down the housing frame toward the base plate. In addition, a plurality of V-shaped slots are formed on the bottom surface of the clutch gear as well as on the top surface of the housing frame, so that the V-shaped slots of the clutch gear are opposed to the V-shaped slots of the housing frame. Here, the V-shaped slots are adapted for auxiliary supporting a plurality of regulating members, which members are placed in a plurality of guide depressions of the fixing shaft respectively.

However, the above regulating device causes a problem in its operation. That is, when folding the mirror housing relative to the automobile body by the motor drive, the regulating members along with the clutch gear are lifted up as the engaging force between the regulating members and the V-shaped slots of the clutch gear is stronger than the engaging force between the regulating members and the V-shaped slots of the housing frame. In this case, the V-shaped slots of the housing frame become out of the controlled engagements with the regulating members to allow a regulated rotation of the housing frame. However, when the mirror housing is suddenly applied with an external force, the regulating members along with the clutch gear are liable to bounce under the compressing force of the biasing spring while both the V-shaped slots of the frame and the V-shaped slots of the clutch gear become out of engagements with the regulating members simultaneously, thus to cause the failure of the regulating device.

### SUMMARY OF THE INVENTION

It is, therefore, an object of the invention to provide a device for regulating a motor-driven foldable rear view mirror of an automobile in which the above problems can be overcome and which reduces the number of regulating elements, reduces the cost of the rear view mirror, prevents random motion of a mirror housing, automatically returns the mirror housing to its controlled position even in the case of minute displacement of the mirror housing due to external impact, achieves desired rigidity of the rear view mirror and provides a safe backward sight for a driver by reliably keeping a controlled position of the rear view mirror.

In order to accomplish the above object, the present invention provides a regulating device according to the appending single claim.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is an exploded perspective view of a regulating device for an electrically controllable rear mirror in accordance with a preferred embodiment of the present invention;

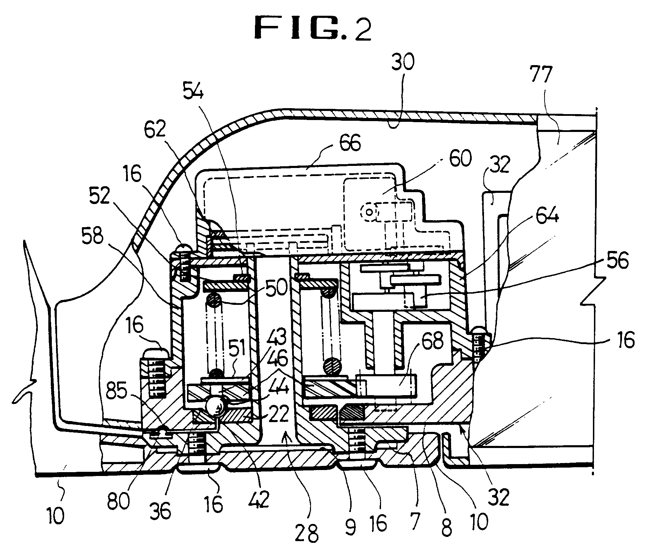

Fig. 2 is a partially sectional view of an electrically controllable rear mirror provided with the regulating device of Fig. 1, showing a construction of the assembled regulating device; and
Figs. 3A to 3C are schematic sectional views showing operations of the regulating device of Fig. 2 respectively, in which:

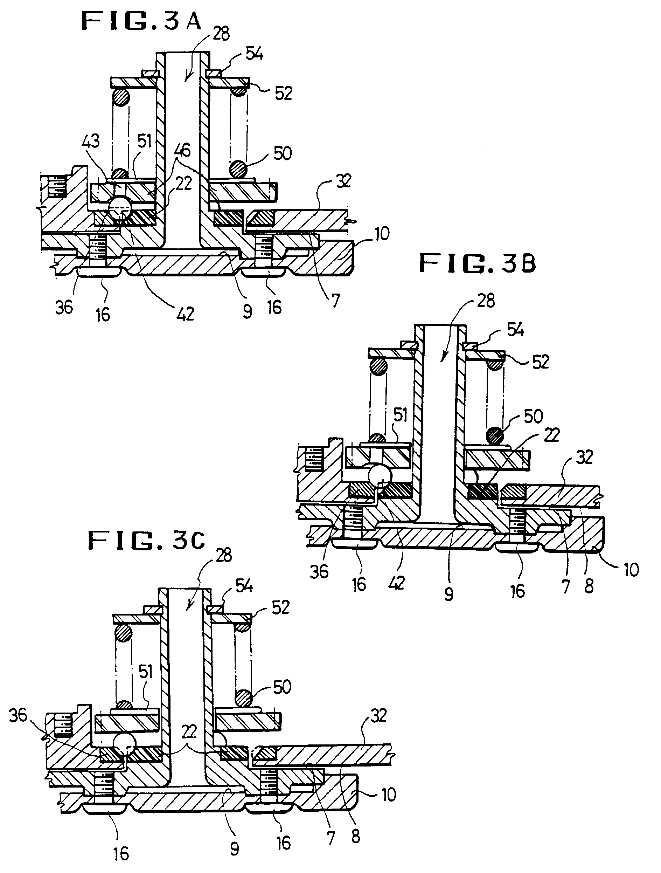

Fig. 3A shows the regulating device in a normal state;
Fig. 3B shows the regulating device in a state for electrically controlling the rear mirror; and
Fig. 3C shows the regulating device in a state for electrically controlling the rear mirror against external impact.

### DESCRIPTION OF THE PREFERRED EMBODIMENTS

With reference to the accompanying drawings, there is shown a regulating device for a motor-driven foldable rear view mirror in accordance with a preferred embodiment of the present invention. In the regulating device, a shaft 28 is vertically coupled to a base plate 9, which base plate 9 is externally mounted to an automobile body. A frame 32 is supported by the shaft 28 so that a horizontal bed 8 of the frame 32 is placed about the shaft 28 so that the housing frame 32 is supported by the shaft 28. In this state, a mirror housing 30 having a mirror 77 can be controlled in its position relative to the automobile body in the manner as described below. A drive unit 60 as well as reduction gears 56 is provided on the frame 32. An end gear 68 of the reduction gears 68 gears into a shaft gear 46, so that the mirror housing 30 is moved centering around the shaft 28 by the rotational force of the drive unit 60.

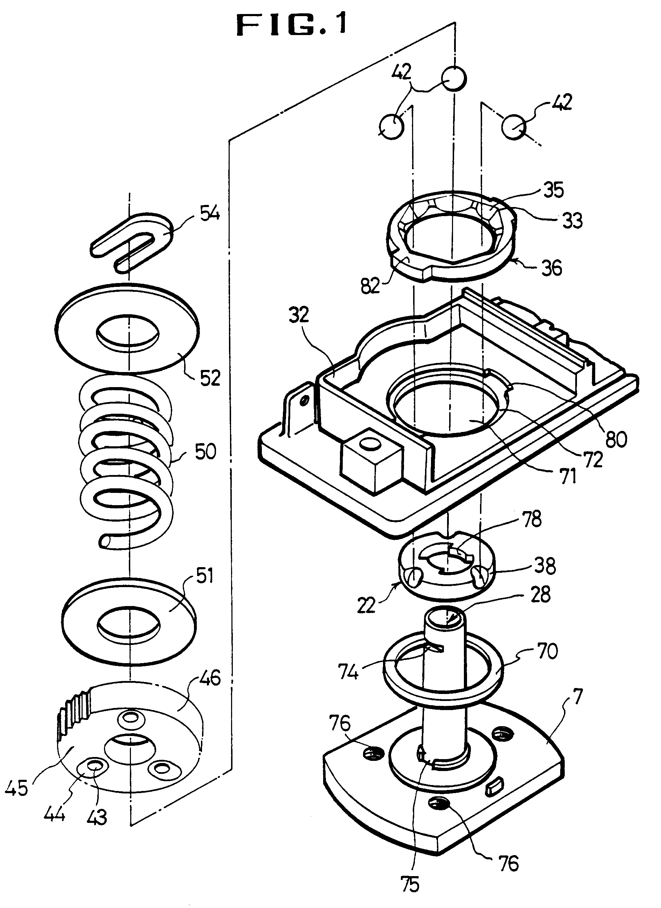

In the drawings, the reference numeral 22 is a shaft reinforcing ring or an inside reinforcing ring fitted over the lower section of the shaft 28. The shaft reinforcing ring 22 is provided with a plurality of U-shaped slots 38 on its upper outside edge so that the slots 38 are spaced out at regular intervals. Meanwhile, the frame 32 has a ring seat 72 for seating thereon an outside reinforcing ring or a frame reinforcing ring 36. The upper inside edge of the frame reinforcing ring 36 is provided with a plurality of V-shaped slots 33 having their guide surfaces 35. The second slots 33 of the frame reinforcing ring 36 are spaced out at regular intervals, so that the slots 33 will be opposed to the first slots 38 of the shaft reinforcing ring 22 when the elements are assembled into the instant regulating device. In addition, the bottom surface of the shaft gear 46 has a plurality of hemispherical guide depressions 44 as shown in Fig. 1, which depressions 44 in turn have their ball seating holes 43 near their center portions.

When assembling the elements into the regulating device, a plurality of regulating members or regulating balls 42 are seated, after fitting the frame 32 over the shaft 28, on depressions defined by the slots 33 and 38 of the reinforcing rings 22 and 36. Thereafter, the shaft gear 46 is placed over the reinforcing rings 22 and 36 with interposition of the regulating balls 42, so that the regulating balls 42 are placed in their associated hemispherical guide depressions 44 of the shaft gear 46 and can move radially of the shaft 28. After placing the shaft gear 46, a biasing member or a compression coil spring 50 is placed on the top surface of the shaft gear 46 with interposition of a bottom washer 51. The top of the spring 50 is stopped by a top washer 52, so that the reinforcing rings 22 and 36 are tightly compressed by the spring force of the spring 50 and tightly kept in their places during a regulating operation of the device.

In the drawings, the reference numeral 16 denotes a fixing screw for fixing a top cover 66 to a frame cover 58, 54 denotes a washer pin, 62 denotes a positional control unit, 64 denotes a reduction gear housing, 70 denotes a friction reducing washer, 71 denotes a shaft hole of the frame 32, 74 denotes a washer pin coupling slit of the shaft 28, 75 denotes a slot for preventing random rotation of the shaft reinforcing ring 22, 76 denotes screw holes of the frame 32, 78 denotes a stop jaw which will be engaged with the slot 75 for preventing random rotation of the shaft reinforcing ring 22, 80 denotes a slot for preventing random rotation of the frame reinforcing ring 36, and the numeral 82 denotes a stop jaw which will be engaged with the slot 80 so as to prevent random rotation of the frame reinforcing ring 36.

Therefore, each of the regulating balls 42 under pressure are normally seated in the spherical space defined by the guide depressions 44 of the shaft gear 46 and the slots 33 and 38 as shown in Fig. 3A. The slots 38 have steeper side walls than those of the slots 33 and the guide depressions 44 to have the associated portions of the regulating balls 42 held therein as the remaining portions of the balls 42 latch the shaft gear 46 to allow the controlled rotation of the frame 32 about the gear 46 and the shaft 28 by the motor drive or an external force while providing the regulation on the rotation of the reinforcing ring 36 and thus the frame 32.

When the drive unit 60 starts in the above state, the end gear 68 of the reduction gears 56 is rotated by the rotating force of the drive unit 60. Since the end gear 68 gears into the shaft gear 46, the shaft gear 46 is rotated by the rotating force of the unit 60 transmitted thereto through the end gear 68. At this time, the engaging force between the regulating balls 42 and the slots 38 of the shaft reinforcing ring 22 is stronger than the engaging force between the regulating balls 42 and the slots 33 of the frame reinforcing ring 36. Therefore, the regulating balls 42 are separated from their associated slots 33 of the frame reinforcing ring 36 but roll upon and move out of the side walls of the slots 38 of the shaft reinforcing ring 22 respectively.

At this time, the regulating balls 42 placed in the hemispherical guide depressions 44 of the shaft gear 46 radially inwardly move and latches the shaft gear 46 as shown in Fig. 3B. Thus, the mirror housing 30, the frame 32, and the ring 36 may be rotated together by the motor drive about the latched shaft gear 46 overcoming the engaging force of the balls 42 to the desired position by the user.

When the rear view mirror is suddenly applied with an external impact, the mirror housing 30 may be turned about the shaft 28 without a motor drive imparted to the end gear 68 of the reduction gears 56. At this time, there is no displacement of the frame reinforcing ring 36 relative to the shaft gear 46. Therefore, the regulating balls 42 are separated from their associated hemispherical guide depressions 44 of the shaft gear 46 and, at the same time, the shaft gear 46 with the engaged end gear 68 is rotated about the shaft 28 together with a rotating unit including the mirror housing 30, the frame 32, and the ring 36 as shown in Fig. 3C.

As described above, a regulating device for a motor-driven foldable rear view mirror of the present invention includes a shaft reinforcing ring fitted over a lower section of a shaft, which shaft reinforcing ring has a plurality of U-shaped slots on its upper outside edge. In addition, a frame reinforcing ring is seated on a ring seat of a frame, which frame reinforcing ring has a plurality of second V-shaped slots on its upper inside edge. When assembling the elements into the regulating device, a plurality of regulating balls are seated, after fitting the frame over the shaft, on depressions defined by the slots of the reinforcing rings. Thereafter, the shaft gear is placed over the reinforcing rings with interposition of the regulating balls, so that the regulating balls are placed in their associated guide depressions of the shaft gear and can move radially of the shaft. After placing the shaft gear, a biasing member is placed on the shaft gear, so that the reinforcing rings are tightly compressed by the spring force of the biasing member and tightly kept in their places during a regulating operation of the device.

With the above structure, the instant regulating device needs no means for keeping predetermined angular distances between the regulating balls and for preventing sudden separation of the regulating balls during regulating motion of the device, thus to reduce the number of elements and to reduce the cost. Another advantage of the instant regulating device is resided in that it prevents random motion of a mirror housing, thus to prevent trouble of the device and to improve operational stability of the device. Furthermore, the regulating device provides a safe backward sight for a driver and lets the driver make safe driving.

## Claims

1. A device for regulating a motor-driven foldable rear view mirror of an automobile, said device comprising:
- a shaft (28) fixedly coupled to a base plate (9) externally mounted to an automobile body,
- a frame (32) placed about said shaft to support a mirror housing (30) foldably over said automobile,
- a drive unit (60) fixed to said frame (32),
- a plurality of reduction gears drivingly connected to said drive unit and having an end gear (68) and a shaft gear (46) gearing into said end gear so as to move said mirror housing centering around said shaft (28) by rotational force of said drive unit,
- a plurality of U-shaped slots (38) associated to said shaft (28) and a plurality of V-shaped slots (33) associated to said frame (32), said V-shaped slots being opposed to said U-shaped slots,
- said shaft gear (46) being fitted over said shaft (28) and having a plurality of guide depressions (44) on its bottom surface,
- a plurality of regulating members (42) seated on said slots and placed in said guide depressions (44) of said shaft gear (46) respectively so as to be moved radially of said shaft (28), and
- a spring (50) placed on said shaft gear (46) and compressing said regulating members (42) to be kept in their places defined by said guide depressions (44) and said slots, **characterised in that**
- a first flat ring (22) is non-rotatably fitted over a lower section of said shaft (28) and has said plurality of U-shaped slots (38) on its upper outside edge,
- a second flat ring (36) is non-rotatably seated on a seat of said frame (32) and has said plurality of V-shaped slots (33) on its upper inside edge, and
- said U-shaped slots (38) have steeper slopes and more vertical side walls than said V-shaped slots (33) and said guide depressions (44) which are of hemispherical form so that said regulating members (42) can better leave their normal position even if said mirror housing (30) is suddenly applied with an external force.

## Patentansprüche

1. Vorrichtung zum Einstellen eines motorgetriebenen klappbaren Rückspiegels für ein Kraftfahrzeug, wobei die Vorrichtung umfaßt:
- eine Welle (28), die fest mit einer Grundplatte (9) verbunden ist, die außen an einer Kraftfahrzeugkarosserie angebracht ist,
- einen Rahmen (32), der um die Welle herum angeordnet ist und ein Spiegelgehäuse (30) trägt, das an das Kraftfahrzeug geklappt werden kann,
- eine Antriebseinheit (60), die an dem Rahmen (32) befestigt ist,
- eine Vielzahl von Untersetzungszahnrädern, die antreibend mit der Antriebseinheit verbunden sind und ein Endzahnrad (68) sowie ein Wellenzahnrad (46) aufweisen, das in das Endzahnrad eingreift, so daß das Spiegelgehäuse um die Welle (28) herum zentriert durch Drehkraft der Antriebseinheit bewegt wird,
- eine Vielzahl U-förmiger Schlitze (38), die zu der Welle (28) gehören, und eine Vielzahl V-förmiger Schlitze (33), die zu dem Rahmen (32) gehören, wobei die V-förmigen Schlitze den U-förmigen Schlitzen gegenüberliegen,
- wobei das Wellenzahnrad (46) auf die Welle (28) gepaßt ist und eine Vielzahl von Führungsvertiefungen (44) an seiner Unterseite aufweist,
- eine Vielzahl von Einstellelementen (42), die auf den Schlitzen sitzen bzw. in den Führungsvertiefungen (44) des Wellenzahnrads (46) angeordnet sind, so daß sie radial zu der Welle (28) bewegt werden können, und
- eine Feder (50), die auf dem Wellenzahnrad (46) angeordnet ist und so auf die Einstellelemente (42) drückt, daß sie an ihren durch die Führungsvertiefungen (44) und die Schlitze bestimmten Positionen gehalten werden, **dadurch gekennzeichnet,** daß:
- ein erster flacher Ring (22) nichtdrehbar auf einen unteren Abschnitt der Welle (28) gepaßt ist und die Vielzahl U-förmiger Schlitze (38) an seinem oberen Außenrand hat,
- ein zweiter flacher Ring (36) nichtdrehbar auf einer Aufnahme des Rahmens (32) sitzt und die Vielzahl V-förmiger Schlitze an seinem oberen Innenrand hat, und
- die U-förmigen Schlitze (38) steilere Schrägen und vertikalere Seitenwände haben als die V-förmigen Schlitze (33) und die Führungsvertiefungen (44), die Halbkugelform haben, so daß die Einstellelemente (42) ihre Normalstellung besser verlassen können, auch wenn plötzlich eine äußere Kraft auf das Spiegelgehäuse (30) wirkt.

## Revendications

1. Dispositif de réglage d'un rétroviseur escamotable actionné par moteur pour un véhicule automobile, ledit dispositif comprenant :
- un arbre (28) relié de manière fixe à une plaque de base (9) montée extérieurement sur une carrosserie du véhicule automobile,
- un bâti (32) placé autour dudit arbre pour supporter un logement de miroir (30) apte à être replié sur ledit véhicule automobile,
- une unité d'entraînement (60) fixée audit bâti (32),
- plusieurs pignons de réduction reliés dans une relation d'entraînement à ladite unité d'entraînement et comportant un pignon d'extrémité (68) et un pignon d'arbre (46) qui engrène avec ledit pignon d'extrémité afin de faire pivoter ledit logement de miroir de façon centrée autour dudit arbre (28) sous l'effet d'une force de rotation de ladite unité d'entraînement,
- plusieurs gorges en forme de U (38) associées audit arbre (28) et plusieurs gorges en forme de V (33) associées audit bâti (32), ledites gorges en forme de V étant situées en face desdites gorges en forme de U,
- ledit pignon d'arbre (46) étant monté sur ledit arbre (28) et présentant plusieurs creux de guidage (44) sur sa face inférieure,
- plusieurs organes de réglage (42) en appui sur lesdites gorges et placés dans lesdits creux de guidage (44) dudit pignon d'arbre (46), respectivement, pour être déplacés radialement par rapport audit arbre (28), et
- un ressort (50) placé sur ledit pignon d'arbre (46) et comprimant lesdits organes de réglage (42) afin de les maintenir à leurs places définies par lesdits creux de guidage (44) et lesdites gorges, **caractérisé en ce que**
- un premier anneau plat (22) est monté de manière non rotative sur une partie inférieure dudit arbre (28) et comporte lesdites multiples gorges en forme de U (38) sur son bord extérieur supérieur,
- un second anneau plat (36) est en appui de manière non rotative sur un siège dudit bâti (32) et comporte lesdites multiples gorges en forme de V (33) sur son bord intérieur supérieur, et
- lesdites gorges en forme de U (38) ont des pentes plus inclinées et des parois latérales plus verticales que lesdites gorges en forme de V (33) et lesdits creux de guidage (44) qui sont de forme hémisphérique afin que lesdits organes de réglage (42) puissent mieux quitter leur position normale même si ledit logement de miroir (30) est subitement soumis à une force extérieure.
